# EUROPEAN PATENT SPECIFICATION

(11) **EP 0 398 715 B1**
(45) Date of publication and mention of the grant of the patent: **19.04.1995**
(21) Application number: 90305335.3
(22) Date of filing: 17.05.1990
(51) Int. Cl.: A01N 49/00

(54) **Method of exterminating rodents and other vertebrate pests**
Verfahren zur Vernichtung von Nagetieren und sonstigen schädlichen Wirbeltieren
Méthode d'extermination des rongeurs et d'autres vertébrés nuisibles

(30) Priority: 17.05.1989 US 352963
(43) Date of publication of application: 22.11.1990
(73) Proprietor: WISCONSIN ALUMNI RESEARCH FOUNDATION, Madison, WI 53705 (US)
(72) Inventor: DeLuca, Hector F., Deerfield, Wisconsin 53531 (US); Smith, Connie M., Madison, Wisconsin 53713 (US)
(74) Representative: Ellis-Jones, Patrick George Armine

(56) References cited:
- GB-A- 1 371 135
- US-A- 4 313 942
- JAPANESE PATENTS GAZETTE, Section Ch, Week 8749 , 27January 1988 Derwent Publications Ltd., London, GB; Class C, Page 3, AN 87-345511/49 & JP-A-62 249 905 (IKARISHODOKU KK) 30 October 1987

## Description

### Background and Summary of the Invention

This invention relates to methods for eliminating or controlling pest populations, and more particularly to such a method which utilizes a vitamin D compound in a high calcium bait diet.

It is well known that annually rodents are responsible for the loss of as much as 10% of the grain crop in the United States and as much as 30% of the grain crop in underdeveloped countries. Rodents are also known to transfer disease, are destructive and contaminate the food supply. Many methods have been devised for eliminating and/or controlling rodents and other vertebrate pests such as starlings , blackbirds (crows and rooks) and pigeons.

The most important rodenticide in recent years has been the anticoagulant series especially warfarin, sodium warfarin, and crystalline sodium warfarin. Warfarin has had the advantage of being difficult to detect in the bait, is not immediately lethal, and thus allows the animal to consume warfarin-containing bait successively and not associate the consumption of that bait with death. It has, however, significant secondary toxicity, i.e. animals poisoned with warfarin can transmit that poison upon consumption by larger animals, as for example a cat consuming rodents poisoned with warfarin. In addition, strains of rats have developed warfarin resistance.

A recent rodenticide has been the use of vitamin D which at high doses is toxic to vertebrate animals. Doses of 750 parts/million or higher are required before vitmain D₂ or vitamin D₃ will cause intoxication. Although this concentration may lead to some detection, it is low enough to be effective. The vitamin D compounds are also of considerable interest in this respect, in that they do not survive for long periods of time in the environment and hence do not present an environmental problem.

A recent important advance has been the development of 1-hydroxylated vitamins since they have much higher toxicity than ordinary vitamin D. Doses of about 15 parts/million is effective against mice, rats, and other rodents, thus eliminating possible detection since it is a tasteless compound and active in small amounts. It has the advantage of being rapidly metabolized and thus provides no secondary toxicity. Furthermore because it is present in small amounts, it is even less of an environmental problem than vitamin D itself. The most important consideration is the higher potency may well reduce the cost of the vitamin D rodenticide. A method of activating vitamin D by 1-hydroxylation has also been introduced, primarily to reduce the cost of manufacturing of 1 -hydroxyvitamin D₃.

Rats often consume high calcium diets quite intensely. In fact, cheese must be regarded as one of the favored foods available to rats and mice. We have learned that the toxicity of vitamin D compounds is greatly increased when calcium intakes are elevated. Vitamin D compounds can therefore be made into superior rodenticides by merely providing them in a high calcium matrix or a high calcium bait diet. This invention, therefore, teaches that a superior method of eliminating pests is to provide a vitamin D compound in a high calcium bait diet. The vitamin D compound can be vitamin D₃, vitamin D₂, 1 alpha-hydroxyvitamin D₃, 1 alpha-hydroxyvitamin D₂, 25-hydroxyvitamin D₃, 1 alpha, 25-dihydroxyvitamin D₃, 1 alpha,25-dihydroxyvitamin D₂, and others as well as the many new analogs which are 1 alpha-hydroxylated, as defined further herein.
Fig. 1 is a graph illustrating the percent fatality of rats versus varying amounts of 1 alpha-hydroxyvitamin D₃ in a 2% calcium diet after 7 days and after 14 days; and
Fig. 2 is a graph illustrating the percent fatality of rats versus time as a result of incorporating 5 parts/million of alpha-hydroxyvitamin D₃ in a 1%, 2%, and 3% calcium diet.

The present invention provides a method for controlling vertebrate pest populations such as rodents, starlings and blackbirds, which method comprises making available to at least one such pest a vitamin D compound in an amount from 4 to 5 parts per million and 2 to 3% of calcium by weight in the diet, as well as a composition suitable for ingestion by a vertebrate pest which comprises a vitamin D compound in an amount from 4 to 5 parts per million and 2 to 3% of calcium by weight.

As used herein the term "vitamin D compound" encompasses compounds which control one or more of the various vitamin D-responsive processes in mammals, i.e. intestinal calcium absorption, bone mobilization, and bone mineralization. Thus the vitamin D compounds encompassed by this invention include cholecalciferol and ergocalciferol and their known metabolites, as well as the known synthetic cholecalciferol and ergocalciferol analogs which express calcemic activity. These synthetic cholecalciferol and ergocalciferol analogs comprise such categories of compounds such as the 5,6-trans-cholecalciferols and 5,6-trans-ergocalciferols, the fluorinated cholecalciferols, the side chain homologated cholecalciferols and side chain homologated Δ²²-cholecalciferols. Specific examples of such compounds include vitamin D metabolites or analogs such as vitamin D₃, vitamin D₂, 1 alpha-hydroxyvitamin D₃, 1 alpha-hydroxyvitamin D₂, 1 alpha,25-dihydroxyvitamin D₃, 1 alpha,25-dihydroxyvitamin D₂, 25-hydroxyvitamin D₃, 25-hydroxyvitamin D₂, 24,24-difluoro-25-hydroxyvitamin D₃, 24,24-difluoro-1 alpha,25-dihydroxyvitamin D₃, 24-fluoro-25-hydroxyvitamin D₃, 24-fluoro-1 alpha,25-dihydroxyvitamin D₃, 2 beta-fluoro-25-hydroxyvitamin D₃, 2 beta-fluoro-1 alpha-hydroxyvitamin D₃, 2 beta-fluoro-1 alpha,25-dihydroxyvitamin D₃, 26,26,26,27,27,27-hexafluoro-25-hydroxyvitamin D₃, 26,26,26,27,27,27-hexafluoro-1 alpha,25-dihydroxyvitamin D₃, 24,25-dihydroxyvitamin D₃, 1 alpha,24,25-trihydroxyvitamin D₃, 25,26-dihydroxyvitamin D₃, 1 alpha,25,26-trihydroxyvitamin D₃, 1 alpha,25-dihydroxy-24-epi-vitamin D₂, 24-homo-1,25-dihydroxyvitamin D₃ 24-dihomo-1,25-dihydroxy vitamin D₃ 24-trihomo-1,25-dihydroxyvitamin D₃ and the corresponding 26- or 26,27-homo, dihomo or trihomo analogs of 1 alpha,25-dihydroxyvitamin D₃.

The vitamin D compound may be made available to a pest population either as the sole intoxicating agent or in combination with other vitamin D compounds or in combination with other agents, such as other rodenticidally effective or intoxicating substances. Doses of from about 1 part/million parts of bait diet to about 500 parts/million parts of bait diet of a vitamin D compound per se, or in combination with other vitamin D compounds, in the pest's diet for a period of about 7 days to about 15 days, the proportions of each of the compounds in the combination being dependent upon the particular pest being treated and the rate of fatality desired, are generally effective. Although the actual amount of the vitamin D compound used is not critical, in all cases sufficient amounts of the compound should be used to effect control of the pest population. Amounts in excess of about 500 parts/million parts of bait diet of the vitamin D compound, or the combination of that compound with other vitamin D compounds, in the pest's diet are generally unnecessary to achieve the desired results and may not be economically sound practice. In practice, it is understood that the specific dosage utilized in any given case will be adjusted in accordance with the specific compounds being employed, the pest to be treated, the condition of the pest and the other relevant facts that may modify the activity of the vitamin D compound or the response of the pest, as is well known by those skilled in the art.

The calcium compound employed in the high calcium diet may be in the form of calcium containing compounds i.e. in a combined form such as in calcium salts like calcium carbonate, calcium citrate, calcium phosphate, calcium gluconate, calcium lactate, calcium acetate, calcium chloride and the like. Combinations of calcium compounds may also be employed. In general, any substance, e.g. milk, containing calcium that may be metabolized by the vertebrate pest may be employed as the calcium compound ingredient in the present invention. The amount of calcium compound employed in the diet of the pest should be sufficient to represent a high calcium diet for the pest. By "high calcium diet" as used in this specification it is meant supplementing the pest's dietary calcium with calcium at a level greater than that level which is normal for the pest. In general, a normal level of calcium would represent 0.5% of the pest's diet. Accordingly, a high calcium diet for a pest would involve the administration of sufficient calcium to increase the total calcium intake in the pest's diet to represent more than 0.5% and in particular, from 2 to 3% of the diet of the vertebrate pest. However, the proportion of the calcium is dependent upon the particular pest being treated and the rate of fatality desired, with the above percentages generally effective to practice the present invention. Although the actual amount of the calcium compound used is not critical, in all cases sufficient of the compound should be used to effect control of the pest population. Amounts in the diet of the pest in excess of about 3% calcium are generally unnecessary to achieve the desired results and may not be economically sound practice. In practice, it is understood that the specific dosage utilized in any given case will be adjusted in accordance with the specific compounds being employed, the pest to be treated, the condition of the pest and the other relevant facts that may modify the activity of the calcium compound or the response of the pest, as is well known by those skilled in the art.

Dosage forms of the vitamin D and calcium compounds can be prepared by combining them with edible material acceptable to the vertebrate pest in a food bait, as is well known in the art. Such edible material may be grains, cheeses, butters, salts, milk products or may be defined material such as casein salts, sugars, vegetable or animal fats and proteins, and may either be solid or liquid. If a solid form is used the dosage form of the compounds and edible material is typically in the form of pellets, powders, biscuits, etc. If a liquid form is used, syrup or liquid suspensions, emulsions or solutions may be the dosage form. The dosage forms may also contain adjuvants, such as preserving, stabilizing, wetting or emulsifying agents, solution promoters, binders, fillers, etc.

The present invention is further described by means of the following illustrative examples.

**Table 1**

| Calcium Intake Increases Rodenticide Activity of 1 alpha-Hydroxyvitamin D₃ | | | | | | |
|---|---|---|---|---|---|---|
| Group | Days of Consumption | | | | | Body Weight |
| | 11 | 12 | 13 | 14 | 15 | |
| Control Group 3% Ca (no D) | 0 | 0 | 0 | 0 | 0 | 318 ± 24 |
| .47% Calcium (Normal level) (5ppm) | 0 | 1/6 | - | 4/6 | 4/6 | 185 ± 16 |
| 1.0% Calcium (5ppm) | 1/6 | - | 3/6 | 4/6 | 4/6 | 183 ± 14 |
| 2.0% Calcium (5ppm) | 1/6 | - | 4/6 | 4/6 | 5/6 | 196 ± 12 |
| 3.0% Calcium (5ppm) | 4/6 | 5/6 | - | - | 6/6* | 194 ± 20 |

Experimental rats were fed a diet composed of vitamin test casein, salts, corn sugar, vegetable oil, and minerals to which was added increasing amounts of calcium according to the diet described by Suda et al (J. Nutr. 100, 1049-1052, 1970). Calcium was added to the diet in the form of calcium carbonate. Calcium carbonate was added at the expense of the corn sugar to achieve the indicated percent calcium in the diet as shown in Table 1.

Six rats in each group were placed on a 3% calcium diet to which was added no vitamin D. All other groups had incorporated in their diet 5 parts/million 1 alpha-hydroxyvitamin D₃. They were fed for 15 days on these diets. As shown in Table 1, the control group receiving only the 3% calcium diet showed no toxicity, and the animals maintained their normal body weight during the 15-day feeding period. On the other hand, with increasing calcium content of the diet, the toxicity of the 5 parts/million 1 alpha-hydroxyvitamin D₃ increased progressively and at 3% calcium, 4 of the 6 animals had already died by day 11 of feeding the 5 parts/million 1 alpha-hydroxyvitamin D₃ and the 3% calcium diet. The results illustrate that the toxicity of 5 parts/million 1 alpha-hydroxyvitamin D₃ is significantly increased by increasing calcium of the bait diet.

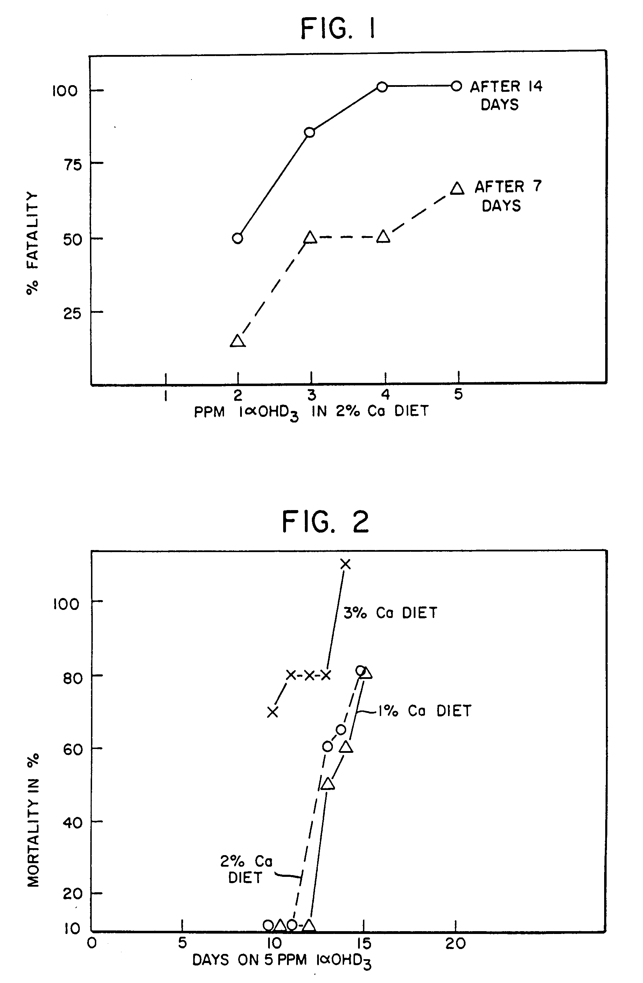

As shown in Figure 1, 4 parts/million 1 alpha-hydroxyvitamin D₃ added to a 2% calcium diet results in 100% fatalities to the animals after 14 days of feeding and 50% after 7 days of feeding. This is to be contrasted with the fact that 15 parts/million of 1 alpha-hydroxyvitamin D₃ is required to kill the animals under normal bait conditions. As shown in Figure 2, the toxicity of 5 parts/million 1 alpha-hydroxyvitamin D₃ is much higher in the 3% calcium diet than in either the 1% or 2% calcium diet.

## Claims

1. A method of controlling a vertebrate pest population which comprises making available to at least one said pest a vitamin D compound in an amount from 4 to 5 parts per million and 2 to 3% of calcium by weight in the diet.

2. A method according to claim 1 wherein said vitamin D compound is vitamin D₃, vitamin D₂, 1 alpha-hydroxyvitamin D₃, 1 alpha, 25-dihydroxyvitamin D₃, 1 alpha- hydroxyvitamin D₂, 1 alpha, 25-dihydroxyvitamin D₂ 25-hydroxyvitamin D₂ or 25-hydroxyvitamin D₃.

3. A method according to claim 2 wherein the vitamin D compound is 1 alpha-hydroxyvitamin D₃.

4. A method according to claim 1, 2 or 3 wherein said diet is made available to one or more rodents.

5. A method according to claim 1, 2 or 3 wherein said diet is made available to one or more starlings.

6. A method according to claim 1, 2 or 3 wherein said diet is made available to one or more crows, rooks or pigeons.

7. A composition suitable for ingestion by a vertebrate pest which comprises a vitamin D compound in an amount from 4 to 5 parts per million and 2 to 3% of calcium by weight.

8. A composition according to claim 7 wherein said vitamin D compound is vitamin D₃, vitamin D₂, 1 alpha-hydroxyvitamin D₃, 1 alpha, 25-dihydroxyvitamin D₃, 1 alpha-hydroxyvitamin D₂, 1 alpha, 25-dihydroxyvitamin D₂ 25-hydroxyvitamin D₂ or 25-hydroxyvitamin D₃.

9. A composition according to claim 8 wherein the vitamin D compound is 1 alpha-hydroxyvitamin D₃.

10. A composition according to claim 7, 8 or 9 which comprises an edible food.

## Patentansprüche

1. Verfahren zur Bekämpfung einer schädlichen Wirbeltierpopulation, das das Verfügbarmachen einer Vitamin D-Verbindung gegenüber wenigstens einem Schädling in einer Menge von 4 bis 5 Teilen pro Millionen Teile und 2 bis 3 Gewichts-% Calcium in dem Nahrungsmittel umfaßt.

2. Verfahren nach Anspruch 1, bei die Vitamin D-Verbindung Vitamin D₃, Vitamin D₂, 1-α-Hydroxyvitamin D₃, 1-α,25-Dihydroxyvitamin D₃, 1-α-Hydroxyvitamin D₂, 1-α,25-Dihydroxyvitamin D₂, 25-Hydroxyvitamin D₂ oder 25-Hydroxyvitamin D₃ ist.

3. Verfahren nach Anspruch 2, bei dem die Vitamin D-Verbindung 1-α-Hydroxyvitamin D₃ ist.

4. Verfahren nach Anspruch 1, 2 oder 3, bei dem das Nahrungsmittel für ein oder mehrere Nagetiere zur Verfügung steht.

5. Verfahren nach Anspruch 1, 2 oder 3, bei dem das Nahrungsmittel für ein oder mehrere Stare zur Verfügung steht.

6. Verfahren nach Anspruch 1, 2 oder 3, bei dem das Nahrungsmittel für ein oder mehrere Krähen, Saatkrähen oder Tauben zur Verfügung steht.

7. Eine Zusammensetzung, die zur Aufnahme durch ein schädliches Nagetier geeignet ist, die eine Vitamin D-Verbindung in einer Menge von 4 bis 5 Teilen pro Millionen Teile und 2 bis 3 Gewichts-% Calcium umfaßt.

8. Eine Zusammensetzung nach Anspruch 7, bei der die Vitamin D-Verbindung Vitamin D₃, Vitamin D₂, 1-α-Hydroxyvitamin D₃, 1-α,25-Dihydroxyvitamin D₃, 1-α-Hydroxyvitamin D₂, 1-α,25-Dihydroxyvitamin D₂, 25-Hydroxyvitamin D₂ oder 25-Hydroxyvitamin D₃ ist.

9. Eine Zusammensetzung nach Anspruch 8, bei der die Vitamin D-Verbindung 1-α-Hydroxyvitamin D₃ ist.

10. Eine Verbindung nach Anspruch 7, 8 oder 9, die ein eßbares Nahrungsmittel umfaßt.

## Revendications

1. Procédé pour réduire une population de vertébrés nuisibles, qui comprend la mise à la disposition d'au moins l'un desdits vertébrés nuisibles, d'une nourriture renfermant un dérivé de la vitamine D en une proportion de 4 à 5 parties par million et 2 à 3 % en poids de calcium.

2. Procédé selon la revendication 1, dans lequel ledit dérivé de la vitamine D est la vitamine D₃, la vitamine D₂, la 1α-hydroxyvitamine D₃, la 1α,25-dihydroxyvitamine D₃, la 1α-hydroxyvitamine D₂, la 1α,25-dihydroxyvitamine D₂, la 25-hydroxyvitamine D₂ ou la 25-hydroxyvitamine D₃.

3. Procédé selon la revendication 2, dans lequel le dérivé de la vitamine D est la 1α-hydroxyvitamine D₃.

4. Procédé selon l'une quelconque des revendications 1 à 3, dans lequel ladite nourriture est mise à la disposition d'un ou plusieurs rongeurs.

5. Procédé selon l'une quelconque des revendications 1 à 3, dans lequel ladite nourriture est mise à la disposition d'un ou plusieurs étourneaux.

6. Procédé selon l'une quelconque des revendications 1 à 3, dans lequel ladite nourriture est mise à la disposition d'un ou plusieurs corbeaux, corneilles ou pigeons.

7. Composition convenant à l'ingestion par un vertébré nuisible, qui comprend un dérivé de la vitamine D en une proportion de 4 à 5 parties par million, et 2 à 3 % en poids de calcium.

8. Composition selon la revendication 7, dans laquelle ledit dérivé de la vitamine D est la vitamine D₃, la vitamine D₂, la 1α-hydroxyvitamine D₃, la 1α,25-dihydroxyvitamine D₃, la 1α-hydroxyvitamine D₂, la 1α,25-dihydroxyvitamine D₂, la 25-hydroxyvitamine D₂ ou la 25-hydroxyvitamine D₃.

9. Composition selon la revendication 8, dans laquelle le dérivé de la vitamine D est la 1α-hydroxyvitamine D₃.

10. Composition selon l'une quelconque des revendications 7 à 9, qui comprend un aliment comestible.
